# EUROPEAN PATENT SPECIFICATION

(11) **EP 2 745 686 B1**
(45) Date of publication and mention of the grant of the patent: **04.01.2017**
(21) Application number: 13192768.3
(22) Date of filing: 13.11.2013
(51) Int. Cl.: A01K 89/01

(54) **Rotor for spinning reel**
Rotor für Angelrolle
Rotor pour moulinet de pêche

(30) Priority: 20.12.2012 JP 2012278710; 02.10.2013 US 201314044098
(43) Date of publication of application: 25.06.2014
(73) Proprietor: SHIMANO INC., Osaka 590-8577 (JP)
(72) Inventor: Hiraoka, Hirokazu, Osaka, Osaka 590-8577 (JP)
(74) Representative: Grosse, Felix Christopher

(56) References cited:
- JP-A- 2003 274 816
- JP-A- 2004 141 039
- JP-A- 2007 195 436

## Description

### BACKGROUND

The present invention relates to a spinning reel, in particular, to a rotor of a spinning reel that delivers fishing line in the forward direction.

A rotor pivotally coupled to a fishing line guide portion for winding fishing line on a spool is provided to a spinning reel. A rotor is comprised of a coupling portion rotatably supported by the reel body via a pinion gear and first and second rotor arms disposed to the coupling portion. The outside surface of the first rotor arm is covered with a cover member. A cylindrically shaped open portion is formed to the rear end portion of the coupling portion. There is a concern that the outside surface of the cover member provided to the open portion, the first rotor arm, and the second rotor arm may be scratched when the spinning reel is placed on the ground with the fishing pole attached. There is a well-known spinning reel, e. g. as disclosed in JP 2005-095131 A or JP 2004-141039 A, that has a guard member for guarding the first and second rotor arms and the rear end portion of the coupling portion. The cover member in JP 2005-095131 A is made from metal and is disposed to protrude to the surface from between the open portion and the cover member provided to the rotor arms or the rear cover member that covers the open portion. The guard member in JP 2004-141039 A is an integrally formed member made from metal and guards and reinforces the first and second rotor arms. The guard member is disposed between the rear end portion of the coupling portion and the cover member as well as between the first and second rotor arms. Also document JP 2007-195436 A discloses a spinning reel according to the preamble of claim 1.

### DISCLOSURE OF THE INVENTION

In the conventional spinning reel, when the guard member is scratched and the guard member needs to be replaced, removing the rear cover member that covers the opening and detaching the rotor from the reel body is necessary. Therefore, replacing the guard member is difficult.

The object of the present invention is to protect the boundary between the rear end surface and the outside surface of the coupling portion while allowing for easy replacement of the guard member.

This object is solved by the spinning reel according to claim 1 but also according to one of the dependent claims.

The spinning reel according to the first aspect of the present invention is a reel capable of delivering fishing line in the forward direction. The spinning reel is comprised of a reel body, a rotor, and a spool. A handle is rotatably,supported by the reel body. The rotor is supported by the reel body to rotate around the longitudinal axis that counters the handle. The spool is supported by the reel body to move in the direction of the longitudinal axis, and fishing line is wound thereon according to a rotor.

The rotor is comprised of a rotor body, a first cover member, a first guard member, a second guard member, and a fishing line guide portion. The rotor body is comprised of a cylindrical coupling portion, a first rotor arm, and a second rotor arm. The cylindrical coupling portion is rotatably supported by the reel body. The first rotor arm extends forward from the rear end portion of the coupling portion while being spaced apart from the coupling portion. The first rotor arm has a pair of first side portions. The second rotor arm extends forward from the position that opposes the first rotor arm at the rear end portion of the coupling portion while being spaced apart from the coupling portion. The second rotor arm has a pair of second side portions.

The first cover member is detachably disposed to the rotor body and radially covers the outside of the first rotor arm. The first guard member is detachably disposed to the rotor body and has a first guard portion that covers at least one portion of the boundary between the outside surface and the rear end surface of the coupling portion. The second guard member is detachably disposed to the rotor body and has a second guard portion that covers at least one portion of the boundary between the outside surface and the rear end surface of the coupling portion at a position that opposes the first guard portion. The fishing line guide portion is pivotally disposed at the extreme end of the first rotor arm.

In this spinning reel, the first guard portion of the first guard member covers at least one portion of the boundary between the outside surface and the rear end surface of the coupling portion. Also, the second guard portion of the second guard member covers at least one portion of the boundary between the outside surface and the rear end surface of the coupling portion at a position that opposes the first guard portion. Here, at least one portion of the boundary between the outside surface and the rear end surface of the coupling portion is protected by the two guard members, namely, the first guard member and the second guard member at the respectively different positions. Therefore, the first guard member and the second guard member can be detached separately without detaching the rotor from the reel body. As a result, the rear end surface and the outside surface of the coupling portion can be protected while allowing for easy replacement.

The first guard member has a third guard portion that covers at least one portion of the boundary between first cover member and one of the first side portions of the first rotor arm. The second guard member has a fourth guard portion that covers at least one portion of the boundary between first cover member and the other first side portion of the first rotor arm. In this case, in addition to protecting the rear end surface and the outside surface of the coupling portion, the boundary between the pair of side portions of the first rotor arm and the also first cover member can be protected. Preferably, the fifth guard portion is integrally formed to the first guard portion and the sixth guard portion is integrally formed to the second guard portion.

The spinning reel according to the second aspect of the present invention relates to the spinning reel according to the first aspect of the present invention, wherein the first guard portion and the second guard portion are disposed in the coupling portion between the first rotor arm and the second rotor arm. In this case, the first guard portion and the second guard portion are disposed in the coupling portion between the first rotor arm and the second rotor arm. Therefore, the rear end portion of the coupling portion that may come into contact with the ground surface can reliably be protected. Also, integrally forming the section for protecting the first rotor arm and the second rotor arm is easy when protecting in combination both the first rotor arm and the second rotor arm.

The spinning reel according to the third aspect of the present invention relates to the spinning reel according to any one of the first to third aspect of the present invention, wherein the first guard member is integrally formed to the first guard portion and the second guard member is integrally formed to the second guard portion.

The spinning reel according to the fourth aspect of the present invention relates to the spinning reel according to the third or fourth aspect of the present invention, wherein the first cover member is fixed to the first rotor arm by at least a first fastening member. The first guard member is fixed to the rotor body by a second fastening member at the connecting section that is located between the first guard portion and the third guard portion, and the second guard member is fixed to the rotor body by a third fastening member at the connecting section that is located between the second guard portion and the fourth guard portion.

In this case, the first cover member is fixed to the first rotor arm according to the first fastening member, and the first guard member and the second guard member are fixed to the rotor body according to the respective second fastening member. Therefore, the first guard member and the second guard member can be detached from the rotor body according to the respective second and third fastening member.

The spinning reel according to the fifth aspect of the present invention relates to the spinning reel according to any one of the third to the fifth aspect of the present invention, wherein the third guard portion is disposed between the first cover member and the first rotor arm and has a first holding portion fixed to the first rotor arm according to the first cover member. The fourth guard portion is disposed between the first cover member and the first rotor arm and has a second holding portion fixed to the first rotor arm according to the first cover member.

In this case, when the first cover member is fixed to the first rotor arm, the first holding portion and the second holding portion are fixed to the first rotor arm. Therefore, even if the first guard member and the second guard member are respectively fixed with a single fastening member, wobbling is not likely to occur in the third guard portion and the fourth guard portion.

The spinning reel according to the sixth aspect of the present invention relates to the spinning reel according to any one of the third to sixth aspect of the present invention, wherein the first holding portion has a first engaging portion that prevents the displacement of the third guard portion by engaging with the inner surface of the first cover member. The second holding portion has a second engaging portion that prevents the displacement of the fourth guard portion by engaging with the inner surface of the first cover member.

The spinning reel according to the seventh aspect of the present invention relates to the spinning reel according to the seventh aspect of the present invention, wherein the first holding portion further has a first positioning protrusion that is provided separate from the first engaging portion and positions the third guard portion and the second holding portion further has a second positioning protrusion that is provided separate from the second engaging portion and positions the fourth guard portion.

In this case, even if the first guard member and the second guard member are respectively fixed to the rotor body with a single fastening member, displacement of the third guard portion of the first guard member can be prevented with the first engaging portion, and displacement of the fourth guard portion of the second guard member can be prevented with the second engaging portion. Also, the third guard portion is positioned according to the first positioning protrusion, and the fourth guard portion is positioned according to the second positioning protrusion. Therefore, the third guard portion and the fourth guard portion are not likely to be displaced.

The spinning reel according to the eighth aspect of the present invention relates to the spinning reel according to any one of the second to the eighth aspects of the present invention, wherein the first guard portion and the third guard portion of the first guard member and the second guard portion and the fourth guard portion of the second guard member are smoothly connected.

In this case, the third guard portion that is disposed along the longitudinal direction, and the first guard portion that is disposed along the circumferential direction, as well as the fourth guard portion that is disposed along the longitudinal direction and the second guard portion that is disposed along the circumferential direction, are smoothly connected. Therefore, the fishing line is not likely to get caught at the connecting section.

The spinning reel according to the ninth aspect of the present invention relates to the spinning reel according to any one of the second to the eighth aspects of the present invention, wherein the rotor has a second cover member that covers the radially outer side of the second rotor arm. One of the first side portions of the first rotor arm is disposed more on the upstream side in the fishing line winding direction of the rotor than the other first side portion. The first guard member covers at least one portion of the boundary between one of the second side portions of the second rotor arm and the second cover member. The first guard member has a fifth guard portion. The second guard member covers at least one portion of the boundary between the other second side portions of the second rotor arm and the second cover member. The second guard member has a sixth guard portion. One of the second side portions of the second rotor arm is disposed more on the downstream side in the fishing line winding direction of the rotor than the other second side portion.

In this case, the boundary between one of the second side portions of the second rotor arm and the second cover member is covered with the first guard member, and the boundary between the other second side portion of the second rotor arm and the second cover member is covered with the second guard member. Therefore, it is possible to protect the boundary between the pair of second side portions of the second rotor arm and the second cover member in addition to protecting the boundary between the rear end surface and the outside surface of the coupling portion and the boundary between the pair of first side portions of the first rotor arm and the first cover member.

The spinning reel according to the tenth aspect of the present invention relates to the spinning reel according to the tenth aspect of the present invention, wherein the second cover member is fixed to the second rotor arm by at least the fourth fastening member. The first guard member is fixed to the rotor body at the connecting section of the first guard portion and the fifth guard portion, and the second guard member is fixed to the rotor body at the connecting section of the second guard portion and the sixth guard portion by a fifth fastening member.

In this case, the second cover member is fixed to the rotor with the fourth fastening member, and the first guard member and the second guard member are fixed to the rotor body with the second fastening member and the third fastening member, respectively. Therefore, the first guard member and the second guard member can be detached from the rotor body according to the respective second member and the third fastening member.

The spinning reel according to the eleventh aspect of the present invention relates to the spinning reel according to the tenth or eleventh aspect of the present invention, wherein the fifth guard portion is disposed between the second cover member and the second rotor arm and has a third holding portion fixed to the second rotor arm. The sixth guard portion is disposed between the second cover member and the second rotor arm and has a fourth holding portion fixed to the second rotor arm.

In this case, when the second cover member is fixed to the second rotor arm, the third holding portion and the fourth holding portion are fixed to the second rotor arm. Therefore, even if the first guard member and the second guard member are fixed with the respective fastening member at the respective connecting section, wobbling is not likely to occur in the fifth guard portion and the sixth guard portion.

Preferably, the third holding portion has a third engaging portion engaging the inner surface of the second cover member to prevent displacement of the fifth guard portion. It is further preferable that the third holding portion has a third positioning protrusion that is provided separate from the third engaging portion to position the fifth guard portion. It is preferable that the fourth holding portion has a fourth engaging portion engaging the inner surface of the second cover member to prevent displacement of the sixth guard portion. Preferably, the third holding portion has a fourth positioning protrusion that is provided separate from the fourth engaging portion to position the sixth guard portion.

In this case, even if the first guard member and the second guard member are fixed to the rotor body by the second fastening member and the third fastening member at the respective connecting section, the respective displacement of the fifth guard portion of the first guard member and the sixth guard portion of the second guard member can be prevented with the third engaging portion and the fourth engaging portion; moreover, the positioning thereof is carried out according to the third positioning protrusion and the fourth positioning protrusion. Therefore, even if a fifth guard portion is provided to the first guard member and a sixth guard portion to the second guard member, displacement of the fifth guard portion and the sixth guard portion is not likely to occur.

The spinning reel according to the twelfth aspect of the present invention relates to the spinning reel according to any one of the ninth to the twelfth aspects of the present invention, wherein the first guard portion and the fifth guard portion of the first guard member and the second guard portion and the sixth guard portion of the second guard member have exterior surfaces that are smoothly connected.

In this case, the fifth guard portion disposed along the longitudinal direction and the first guard portion disposed along the circumferential direction, as well as the sixth guard portion disposed along the longitudinal direction and the second guard portion disposed along the circumferential direction, is connected smoothly. Therefore, the fishing line is not likely to get caught at the connecting section.

The spinning reel according to the thirteenth aspect of the present invention relates to the spinning reel according to any one of the first to the thirteenth aspects of the present invention, wherein the first guard member and the second guard member are made from a synthetic resin, the synthetic resin material being exposed on the outside surface of each of the first and second guard members. In this case, the first guard member and the second guard member are made from a synthetic resin. Therefore, reduction in the weight can be achieved even if a guard member that is softer and more easily scratched than that made from metal is installed. Also, the synthetic resin material is exposed on the outside surface, namely, a coat is not formed according to plating, coating, or the like. Therefore, the coat does not peel off, and only the material itself is scratched. As a result, even if the first guard member and the second guard member are scratched, the scratch is not conspicuous.

The spinning reel according to the fourteenth aspect of the present invention relates to the spinning reel according to any one of the preceding claims, wherein the rotor is detachably mounted to the rotor body.

### BRIEF DESCRIPTION OF THE DRAWINGS

Referring now to the attached drawings which form a part of this original disclosure:
FIG. 1 is a side view of a spinning reel according to an embodiment of the present invention;
FIG. 2 is a cross-sectional side view of a spinning reel;
FIG. 3 is an exploded perspective view of a rotor;
FIG. 4 is an exploded perspective view of a guard member;
FIG. 5 is a schematic cross-sectional view of the extreme end side of the first rotor arm;
FIG. 6 is a schematic cross-sectional view of the base end side of the first rotor arm; and
FIG. 7 is an exploded perspective view of another embodiment that corresponds to FIG. 4.

### DETAILED DESCRIPTION OF EMBODIMENTS

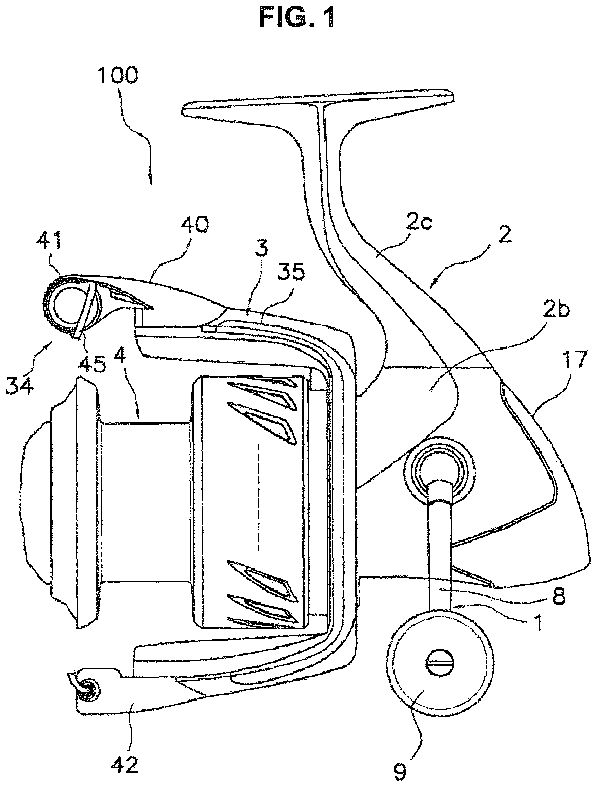

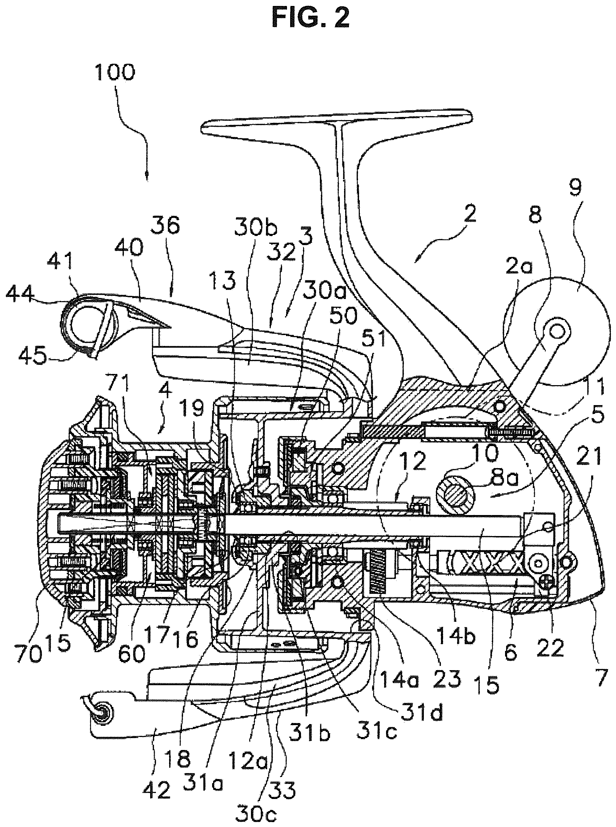

In FIGS. 1 and 2, the spinning reel 100 according to an embodiment of the present invention delivers fishing line in the forward direction. The spinning reel 100 is comprised of a reel body 2 that rotatably supports the handle 1, a rotor 3, and a spool 4. The rotor 3 is for winding fishing line on the spool 4 and is rotatably supported at the front portion of the reel body 2. The spool 4 is for winding fishing line on the outer circumferential surface and is disposed at the front portion of the rotor 3 to move back and forth. The handle 1 can be mounted on either the left side of the reel body 2 or on the right side of the reel body 2 as illustrated in FIG. 1.

As illustrated in FIGS. 1 and 2, the handle 1 is comprised of a handle arm 8 that is mounted at the tip of the handle shaft 8a (FIG. 2) and extends in the direction that crosses the handle shaft 8a, a handle shaft (not illustrated in the drawings) fixed to the extreme end of the handle arm 8, and a handle grip 9 rotatably mounted to the handle shaft.

As illustrated in FIGS. 1 and 2, the reel main body 2 is comprised of a reel body 2a that has an opening and is made from, for example, an aluminum alloy, a cover member 2b (refer to FIG. 1) detachably mounted to the reel body 2a to cover the opening and is made from, for example, an aluminum alloy, and a rod attachment leg 2c that extends forward at an upward slant from the reel body 2a. The reel body 2a has a space on the inside that connects to the opening, and this space accommodates a rotor drive mechanism 5 for rotating the rotor 3 by interlocking with the rotation of the handle 1 and an oscillating mechanism 6 for uniformly winding fishing line by moving the spool 4 back and forth. The guard 7 is mounted to the rear portion of the cover member 2b and the reel body 2b. The guard 7 is fixed to the reel body 2a according to a single screw member.

As illustrated in FIG. 2, the rotor drive mechanism 5 is comprised of a drive shaft 10 whereto the handle shaft 8a of the handle 1 is fixed, a drive gear 11 that rotates in conjunction with the drive shaft 10, and a pinion gear 12 that interlocks with the drive gear 11. The drive shaft 10 is, for example, a cylindrical shaft made from a stainless steel alloy and is supported at the two ends with the bearings (not illustrated in the drawing) mounted to the reel body 2a and the cover member 2b. A female threaded portion (not illustrated in the drawing) is formed on the inner circumferential surface of the drive shaft 10.

The pinion gear 12 is, for example, a cylindrical member made from a stainless steel alloy, and the front portion 12a thereof penetrates the center portion of the rotor 3 and is integrally and rotatably fixed to the rotor 3 with a nut 13. The nut 13 is prevented from rotating with a retainer 18. The retainer 18 is fixed to the rotor 3. The middle portion and the rear end portion in the axial direction of the pinion gear 12 are rotatably supported by the reel body 2a with the bearings 14a and 14b that are mounted to the reel body 2a while spaced apart from each other.

The oscillating mechanism 6 is a mechanism for moving the spool shaft 15 coupled to the center portion of the spool 4 via a drag mechanism 60 in the longitudinal direction to reciprocally move the spool 4 in the longitudinal direction. The oscillating mechanism 6 has a screw shaft 21 disposed below the spool shaft 15 to be parallel to the spool shaft, a slider 22 that moves in the longitudinal direction along the screw shaft 21, and an intermediate gear 23 fixed to the tip of the screw shaft 21. The screw shaft 21 is disposed in the longitudinal direction and rotatably supported by the reel body 2a. The base end of the spool shaft 15 is rotatably coupled to the slider 22.

The rear end of the spool shaft 15 is non-rotatably fixed to the slider 22. The slider 22 is guided in the longitudinal direction according to two guide shafts (not shown in the drawing) disposed to the reel body 2a along the longitudinal direction. The intermediate gear 23 interlocks with the pinion gear 12.

The spool shaft 15 is disposed by penetrating the center portion of the pinion gear 12. The spool shaft 15 reciprocally moves back and forth on the inside portion of the pinion gear 12 according to the oscillating mechanism 6. The middle portion of the spool shaft 15 is supported according to a bearing 16 mounted in the nut 13, and the rear portion is supported according to the rear inner circumferential surface of the pinion gear 12 to rotate and move in the axial direction.

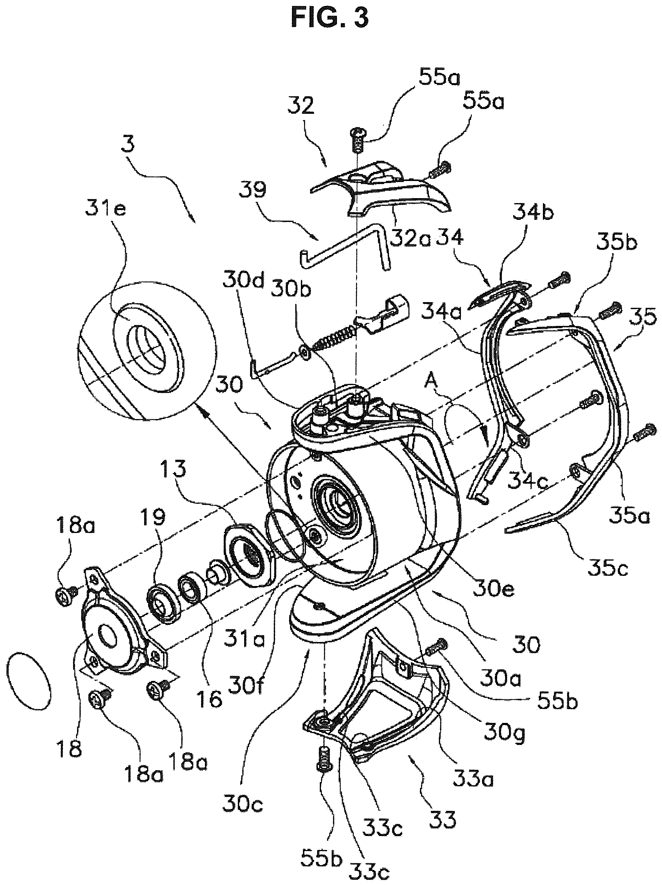

As illustrated in FIGS. 2 and 3, the rotor 3 is rotatably supported by the reel main body 2 via the pinion gear 12. The rotor 3 is comprised of a rotor body 30 integrally and rotatably coupled to the pinion gear 12, a first cover member 32, a second cover member 33, a first guard member 34 (refer to FIG. 3), a second guard member 35, and a bail arm 36 (an example of the fishing line guide portion).

The rotor body 30 is comprised of a bottom cylindrical coupling portion 30a rotatably coupled to the reel body 2 via the pinion gear 12, a first rotor arm 30b, and a second rotor arm 30c. The coupling portion 30a is cylindrically formed to slightly increase in diameter toward the rear. The first rotor arm 30b extends forward from the first side (the top side in FIG. 2) of the rear end portion of the coupling portion 30a while being spaced apart from the coupling portion 30a. The second rotor arm 30c extends forward from the second side (the bottom side in FIG. 2) that opposes the first side of the rear end portion of the coupling portion 30a while being spaced apart from the coupling portion 30a. The rotor body 30 is integrally formed, for example, from an aluminum alloy or a magnesium alloy.

A wall portion 31a is formed to the front portion of the coupling portion 30a, and a boss portion 31b is formed at the center portion of the wall portion 31 a. A through hole 31c is formed at the center portion of the boss portion 31 b, and the front portion 12a of the pinion gear 12 and the spool shaft 15 penetrate this through hole 31 c. A nut 13 for fixing the rotor 3 to the pinion gear 12 is disposed at the front portion of the wall portion 31a. A seal member 17 for preventing liquid from infiltrating into the reel 2a from the space between the spool shaft 15 and the nut 13 is mounted between the nut 13 and the spool shaft 15. The seal member 17 is disposed to make contact with the nut 13. A concave portion 31d that has a circular space capable of accommodating the front portion of the reel body 2 is formed at the rear portion of the coupling portion 30a.

A retainer 18 is mounted to the front surface of the wall portion 31a of the coupling portion 30a. The retainer 18 is fixed to the wall portion 31a with multiple (e.g., three) bolt members 18a. The retainer 18 is provided to prevent the nut 13 from rotating, as well as to slightly pressurize the seal member 17 to prevent a space from being created between the bearing 16 and the spool shaft 15. A mounting seat 31 e, which has a female threaded portion that protrudes forward slightly more (e.g., 0.5 mm to 2 mm) than the other portions, is disposed to the wall portion 31a as illustrated and enlarged in FIG. 3. Machining of the end surface of the mounting seat 31 e that protrudes more than the other portions as described above is possible. Therefore, the mounting position of the retainer 18 is not easily tilted, and the seal member 17 can be stably pressurized. As a result, the sealing performance of the seal member 17 is enhanced.

As illustrated in FIG. 3, the first rotor arm 30b extends forward while outwardly curving in a convex shape from the coupling portion 30a and curves while widening in the circumferential direction of the coupling portion 30a. The first rotor arm 30b has a pair of first side portions 30d and 30e. The first side portion 30d is disposed more on the upstream side of rotor 3 in the fishing line winding direction indicated with arrow A than the other first side portion 30e. The second rotor arm 30c extends forward while outwardly curving in a convex shape from the coupling portion 30a, and the connecting part to the coupling portion 30a curves while widening in the circumferential direction of the coupling portion 30a. The second rotor arm 30c has a pair of second side portions 30f and 30g. One of the second side portions 30f is disposed more on the downstream side of rotor 3 in the fishing line winding direction indicated with arrow A than the other second side portion 30g.

The first cover member 32 radially covers the outer side of the first rotor arm 30b. The first cover member 32 has an outside surface configured from a three-dimensional curved surface. The first cover member 32 is fixed to the first rotor arm 30b by two screw members 55a that are mounted from the outside surface and the rear end portion. The screw member 55a is one example of a first fastening member. A bail arm reversing mechanism 39 is disposed between the first cover member 32 and the first rotor arm 30b. The rear end portion of the first cover member 32 is formed into an arc-shape along the rear end outer circumferential surface of the coupling portion 30a. Accordingly, the rear end portion of the first rotor arm 30b is covered. A pair of first mounting concave portions 32a that are slightly concaved for mounting the third guard portion 34b, to be described later, of the first guard member 34 and the fourth guard portion 35b, to be described later, of the second guard member 35 are formed at the two side portions of the first cover member 32.

The second cover member 33 covers the radially outer side of the second rotor arm 30c. The second cover member 33 has an outside surface configured from a three-dimensional curved surface. The center portion of the second cover member 33 is opened. The second cover member 33 is fixed to the second rotor arm 30c by two screw members 55b that are mounted from the outside surface and the rear end portion. The screw member 55b is one example of a fourth fastening member. The rear end portion of the second cover member 33 is formed into an arc-shape along the rear end outer circumferential surface of the coupling portion 30a. Accordingly, the rear end portion of the second rotor arm 30c is covered. A pair of second mounting concave portions 33a that are slightly concaved for mounting the fifth guard portion 34c, to be described later, of the first guard member 34 and the sixth guard portion 35c, to be described later, of the second guard member 35 are formed at the two side portions of the second cover member 33.

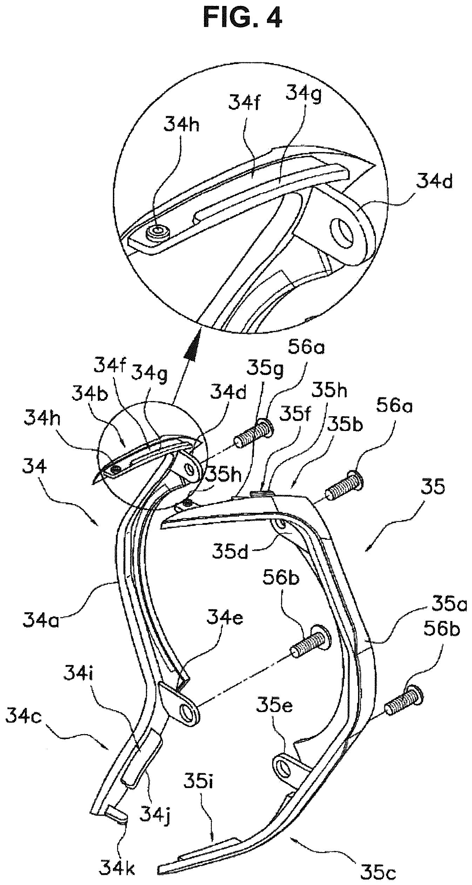

As illustrated in FIGS. 3 and 4, the first guard member 34 is detachably disposed to the rotor body 30. The first guard member 34 is comprised of a first guard portion 34a, a third guard portion 34b, and a fifth guard portion 34c. The second guard member 35 is comprised of a second guard portion 35a, a fourth guard portion 35b, and a sixth guard portion 35c. The first guard member 34 and the second guard member 35 are respectively made from, for example, a synthetic resin, such as polyamide resin, polyacetal resin, or the like, and are formed for the synthetic resin material to be exposed on the outside surface. Therefore, a coat according to plating, coating, or the like is not formed on the outside surface. As a result, in the first guard member 34 and the second guard member, the color of the synthetic resin material (e.g., black, yellow, red, grey, white, or the like) appears as is on the exterior.

The first guard portion 34a covers at least the boundary between the outside surface and the rear end surface of the round coupling portion 30a. In this embodiment, the first guard portion 34a is disposed between the first rotor arm 30b and the second rotor arm 30c. The first guard portion 34a is formed to curve in an arc-shape along the rear end surface of the coupling portion 30a. The third guard portion 34b is integrally formed to the first guard portion 34a and covers at least one portion (one portion in this embodiment) of the boundary between the first cover member 32 and the first side portion 30d of the first rotor arm 30b. The second guard portion 34b extends forward along the first side portion 30d of the first rotor arm 30b. The fifth guard portion 34c is integrally formed to the first guard portion 34a at a position on the opposite side from the third guard portion 34b. The fifth guard portion 34c covers at least one portion (one portion in this embodiment) of the boundary between the second cover member 33 and the first side portion 30f of the second rotor arm 30c. The fifth guard portion 34c extends forward along the first side portion 30f of the second rotor arm 30c.

The second guard portion 35a covers one portion of the boundary between the outside surface and the rear end surface of the round coupling portion 30a at a position on the opposite side from the first guard portion 34a. The second guard portion 35a is formed to curve in an arc-shape along the rear end surface of the coupling portion 30a. The fourth guard portion 35b is integrally formed to the second guard portion 35a and covers at least one portion (one portion in this embodiment) of the boundary between the first cover member 32 and the other first side portion 30e of the first rotor arm 30b. The fourth guard portion 35b extends forward along the other first side portion 30e of the first rotor arm 30b. The sixth guard portion 35c is integrally formed to the second guard portion 35a at a position on the opposite side from the fourth guard portion 35b. The sixth guard portion 35c covers at least one portion (one portion in this embodiment) of the boundary between the second cover member 33 and the other second side portion 30g of the second rotor arm 30c. The sixth guard portion 35c extends forward along the other second side portion 30g of the second rotor arm 30c.

The first fastening brackets 34d and 35d are respectively disposed in the boundary between the first guard portion 34a and the third guard portion 34b and the boundary between the second guard portion 35a and the fourth guard portion 35b while opposing each other. The first fastening brackets 34d and 35d are disposed to make contact with the boss portion not shown in the drawing formed on the rear surface of the coupling portion 30a. The first fastening bracket 34d and the first fastening bracket 35d are each fixed to the first boss portion by a screw member 56a that is screwed to the first boss portion by penetrating the first fastening brackets 34d and 35d. The screw member 56a is one example of a second fastening member and of a third fastening member.

The second fastening brackets 34e and 35e are respectively disposed in the boundary between the first guard portion 34a and the fifth guard portion 34c and the boundary between the second guard portion 35a and the sixth guard portion 35c while opposing each other. The second fastening brackets 34e and 35e are disposed to make contact with the second boss portion, not shown in the drawing, formed on the rear surface of the coupling portion 30a. The second fastening bracket 34e and the second fastening bracket 35e are fixed to the second boss portion by a screw member 56b that is screwed to the second boss portion by penetrating the second fastening brackets 34e and 35e. The screw member 56b is one example of a fifth fastening member. Therefore, the first guard member 34 and the second guard member 35 are detachably fixed to the rotor body 30 according to the screw member 56a and the screw member 56b.

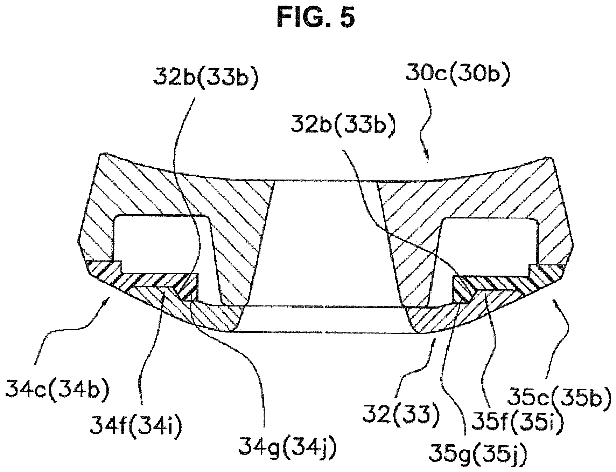

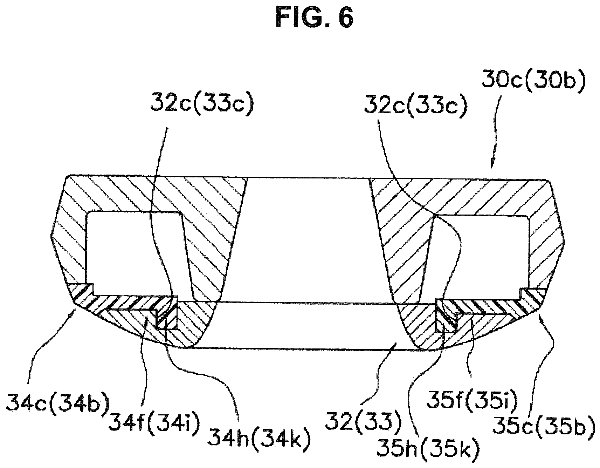

As illustrated in FIGS. 4, 5, and 6, the second guard portion 34b of the first guard member 34 has a first holding portion 34f. The first holding portion 34f is disposed between the first cover member 32 and the first rotor arm 30b and is fixed to the first rotor arm 30b by fixing the first cover member 32 to the first rotor arm 30b. The first holding portion 34f is comprised of a first engaging portion 34g for preventing a displacement of the second guard portion 34b in relation to the first cover member 32 by engaging with the inner surface of the first cover member 32 and a first positioning protrusion 34h provided separate from the first engaging portion 34g and positions the second guard portion 34b in relation to the first cover member 32. The first engaging portion 34g engages with the tilted surface 32b (refer to FIG. 5) formed to the inner surface of the first cover member 32. The first positioning protrusion 34h is fitted to the positioning concave portion 32c formed to the inner surface of the first cover member 32.

The fourth guard portion 35b of the second guard member 35 has a second holding portion 35f. The second holding portion 35f is disposed between the first cover member 32 and the first rotor arm 30b and is fixed to the first rotor arm 30b by fixing the first cover member 32 to the first rotor arm 30b. The second holding portion 35f is comprised of a second engaging portion 35g for preventing a displacement of the fourth guard portion 35b in relation to the first cover member 32 by engaging with the inner surface of the first cover member 32 and a second positioning protrusion 35h provided separate from the second engaging portion 35g and positions the fourth guard portion 35b in relation to the first cover member 32. The second engaging portion 35g engages with the tilted surface 32b (refer to FIG. 5) formed to the inner surface of the first cover member 32. The second positioning protrusion 35h is fitted to the positioning concave portion 32c formed to the inner surface of the first cover member 32.

Also, the fifth guard portion 34c of the first guard member 34 has a third holding portion 34i. The third holding portion 34i is disposed between the second cover member 33 and the second rotor arm 30c and is fixed to the second rotor arm 30c by fixing the second cover member 33 to the second rotor arm 30c. The third holding portion 34i is comprised of a third engaging portion 34j for preventing a displacement of the fifth guard portion 34c in relation to the second cover member 33 by engaging with the inner surface of the second cover member 33 and a third positioning protrusion 34k provided separate from the third engaging portion 34j and positions the fifth guard portion 34c in relation to the second cover member 33. The third engaging portion 34j engages with the tilted surface 33b (refer to FIG. 5) formed to the inner surface of the second cover member 33. The third positioning protrusion 34k is fitted to the positioning concave portion 33c formed to the inner surface of the second cover member 33.

The sixth guard portion 35c of the second guard member 35 has a fourth holding portion 35i. The fourth holding portion 35i is disposed between the second cover member 33 and the second rotor arm 30c and is fixed to the second rotor arm 30c by fixing the second cover member 33 to the second rotor arm 30c. The fourth holding portion 35i is comprised of a fourth engaging portion 35j for preventing a displacement of the sixth guard portion 35c in relation to the second cover member 33 by engaging with the inner surface of the second cover member 33 and a fourth positioning protrusion 35k provided separate from the fourth engaging portion 35j and positions the sixth guard portion 35c in relation to the second cover member 33. The fourth engaging portion 35j engages with the tilted surface 33b (refer to FIG. 5) formed to the inner surface of the second cover member 33. The fourth positioning protrusion 35k is fitted to the positioning concave portion 33c formed to the inner surface of the second cover member 33.

The third guard portion 34b, the first guard potion 34a, and the fifth guard portion 34c of the first guard member 34 are smoothly connected. The fourth guard portion 35b, the second guard potion 35a, and the sixth guard portion 35c of the second guard member 35 are smoothly connected.

As illustrated in FIG. 2, the bail arm 36 is pivotally mounted to the extreme ends of the first and second rotor arms 30b and 30c to pivot between a fishing line unwinding position and a fishing line winding position. The bail arm 36 is energized between a fishing line unwinding position and a fishing line winding position according to a bail arm reversing mechanism 39 (FIG. 3). The bail arm 36 winds fishing line onto a spool 4 according to the rotation of the rotor 3 in the fishing line winding direction when in the fishing line winding position.

The bail arm 36 is comprised of a first bail support member 40 pivotally mounted to the outer circumferential side at the tip of the first rotor arm 30b, a second bail support member 42 pivotally mounted to the outer circumferential side at the extreme end of the second rotor arm 30c, and a line roller 41 rotatably mounted to the extreme end of the first bail support member 40. The bail arm 36 also includes a fastening shaft (not shown in the drawings) that is fixed to the extreme end of the first bail support member 40 while being cantilevered to the first bail support member 40 and supports the line roller 41, a fastening shaft cover 44 disposed on the extreme end side of the fastening shaft, and a bail 45 that couples the fastening shaft cover 44 and the second bail support member.

As illustrated in FIG. 2, an anti-reverse mechanism 50 for preventing a reversal of the rotor 3 is disposed on the inside portion of the coupling portion 30a of the rotor 3. The anti-reverse mechanism 50 has a roller type one-way clutch 51 wherein the inner ring idles. This anti-reverse mechanism 50 generally prohibits the reverse rotation of the rotor 3 in the fishing line delivery direction and does not at any time take on a state that allows reverse rotation.

As illustrated in FIG. 2, the spool 4 is disposed between the first rotor arm 30b and the second rotor arm 30c of the rotor 3 and is rotatably supported at the extreme end of the spool shaft 15. The spool 4 is wound with fishing line on the outer circumference while moving in the longitudinal direction in conjunction with the spool shaft 15. The spool 4 is made from, for example, an aluminum alloy. A drag mechanism 60 that applies a brake to the spool 4 such that a set drag force functions on the spool 4 is accommodated on the inside portion of the spool 4.

As illustrated in FIG. 2, the drag mechanism 60 is a mechanism for applying a drag force to the spool 4 by braking the rotation of the spool 4 in the fishing line delivery direction. The drag mechanism 60 is comprised of a drag knob assembly 70 for manually controlling the drag and a friction portion 71 that controls the drag force by being pressurized to the spool 4 side according to the drag knob assembly 70. The drag knob assembly 70 is disposed at the front portion of the spool 4. The friction portion 71 is disposed on the inside portion of the spool 4.

When, for example, the first guard member 34 is scratched in a spinning reel 100 configured as described above, the two screw members 55a that are fastening the first cover member 32 are removed, and the first cover member 32 is detached from the first rotor arm 30b. Then, when the two screw members 56a and 56b, which are fastening the first cover member 34 to the rotor body 30, are removed, the first guard member 34 can be detached from the rotor body 30.

Also, the first guard member 34 and the second guard member 35 are made from a synthetic resin that does not have a coat that allows the color of the material to appear on the surface. Therefore, even if the members are scratched, the scratch is not too conspicuous.

The embodiment described above can be expressed as follows.
(A) The spinning reel 100 is a reel capable of delivering fishing line in the forward direction. The spinning reel 100 is comprised of a reel body 2, a rotor 3, and a spool 4. A handle 1 is rotatably supported by the reel body 2. The rotor 3 is supported by the reel body 2 to rotate around the longitudinal axis that counters the handle 1. The spool 4 is supported by the reel body 2 to move in the direction of the longitudinal axis and is wound with fishing line according to the rotor 3.
   The rotor 3 is comprised of rotor body 30, a first cover member 32, a first guard member 34, a second guard member 35, and a bail arm 36. The rotor body 30 is comprised of a cylindrical coupling portion 30a, a first rotor arm 30b, and a second rotor arm 30c. The cylindrical coupling portion 30a is rotatably supported by the reel body 2. The first rotor arm 30b extends forward from the rear end portion of the coupling portion 30a while being spaced apart from the coupling portion 30a. The first rotor arm 30b has a pair of first side portions 30d and 30e. The second rotor arm 30c extends forward from a position that opposes the first rotor arm 30b at the rear end portion of the coupling portion 30a while being spaced apart from the coupling portion 30a. The second rotor arm 30c has a pair of second side portions 30f and 30g.
   The first cover member 32 is detachably disposed to the rotor body 30 and radially covers the outside of the first rotor arm 30b. The first guard member 34 is detachably disposed to the rotor body 30 and has a first guard portion 34a. The first guard portion 34a covers at least one portion of the boundary between the outside surface and the rear end surface of the coupling portion 30a. The second guard member 35 is detachably disposed to the rotor body 30 and has a second guard portion 35a. The second guard portion 35a covers at least one portion of the boundary between the outside surface and the rear end surface of the coupling portion 30a at a position that opposes the first guard portion 34a. The bail arm 36 is pivotally disposed to the extreme ends of the first rotor arm 30b and the second rotor arm 30c.
   In this spinning reel 100, the first guard portion 34a of the first guard member 34 covers at least one portion of the boundary between the outside surface and the rear end surface of the coupling portion 30a. Also, the second guard portion 35a of the second guard member 35 covers at least one portion of the boundary between the outside surface and the rear end surface of the coupling portion 30a at a position that opposes the first guard portion 34a. Here, at least one portion of the boundary between the outside surface and the rear end surface of the coupling portion 30a is protected according to the two guard members, namely, the first guard member 34 and the second guard member 35 at the respectively different positions. Therefore, the first guard member 34 and the second guard member 35 can be detached separately without detaching the rotor 3 from the reel body 2. As a result, the rear end surface and the outside surface of the coupling portion 30a can be protected while allowing for easy replacement.
(B) In the spinning reel 100, the first guard portion 34a and the second guard portion 35a are disposed in the coupling portion 30a between the first rotor arm 30b and the second rotor arm 30c. In this case, the first guard portion 34a and the second guard portion 35a are disposed in the coupling portion 30a between the first rotor arm 30b and the second rotor arm 30c. Therefore, the rear end portion of the coupling portion 30a that may come into contact with the ground surface can be reliably protected. Also, integrally forming the section for protecting the first rotor arm 30b and the second rotor arm 30c when protecting in combination both the first rotor arm 30b and the second rotor arm 30c is easy.
(C) In the spinning reel 100, the first guard member 34 is integrally formed to the first guard portion 34a and has, in addition, a third guard portion 34b that covers at least one portion of the boundary between the first cover member 32 and the first side portion 30d of the first rotor arm 30b. The second guard member 35 is integrally formed to the second guard portion 35a and has, in addition, a fourth guard portion 35b that covers at least one portion of the boundary between the first cover member 32 and the other first side portion 30e of the first rotor arm 30b. In this case, in addition to protecting the rear end surface and the outside surface of the coupling portion 30a, the boundary between the pair of side portions 30d and 30e of the first rotor arm 30b and the first cover member 32 can be protected.
(D) In the spinning reel 100, the first cover member 32 is fixed at least to the first rotor arm 30b with the screw member 55a. The first guard member 34 is fixed to the rotor body 30 at the connecting section of the first guard portion 34a and the third guard portion 34b, and the second guard member 35 is fixed to the rotor body at the connecting section of the second guard portion 35a and the fourth guard portion 35b with the screw member 56a.
   In this case, the first cover member 32 is fixed to the first rotor arm 30b with the screw member 55a, and the first guard member 34 and the second guard member 35 are fixed to the rotor body 30 according to the respective screw members 56a and 56b. Therefore, the first guard member 34 and the second guard member 35 can be detached from the rotor body 30 according to the respective screw members 56a and 56b.
(E) In the spinning reel 100, the third guard portion 34b is disposed between the first cover member 32 and the first rotor arm 30b and has a first holding portion 34f fixed to the first rotor arm 30b according to the first cover member 32. The fourth guard portion 35b is disposed between the first cover member 32 and the first rotor arm 30b and has a second holding portion 35f fixed to the first rotor arm 30b according to the first cover member 32.
   In this case, when the first cover member 32 is fixed to the first rotor arm 30b, the first holding portion 34f and the second holding portion 35f are fixed to the first rotor arm 30b. Therefore, even if the first guard member 34 and the second guard member 35 are respectively fixed with a single screw member 56a, wobbling is not likely to occur in the third guard portion 34b and the fourth guard portion 35b.
(F) In the spinning reel 100, the first holding portion 34f has a first engaging portion 34g that prevents the displacement of the third guard portion 34b by engaging with the inner surface of the first cover member 32 and a first positioning protrusion 34h that is provided separate from the first engaging portion 34g and positions the third guard portion 34b. The second holding portion 35f has a second engaging portion 35g that prevents the displacement of the fourth guard portion 35b by engaging with the inner surface of the first cover member 32 and a second positioning protrusion 35h that is provided separate from the second engaging portion 35g and positions the fourth guard portion 35b.
   In this case, even if the first guard member 34 and the second guard member 35 are respectively fixed to the rotor body 30 with a single second screw member 56a, displacement of the third guard portion 34b of the first guard member 34 can be prevented with the first engaging portion 34g, and displacement of the fourth guard portion 35b of the second guard member 35 can be prevented with the second engaging portion 35g. Also, the third guard portion 34b is positioned according to the first positioning protrusion 34h, and the fourth guard portion 35b is positioned according to the second positioning protrusion 35h. Therefore, the third guard portion 34b and the fourth guard portion 35b are not likely to be displaced.
(G) In the spinning reel 100, the first guard portion 34a and the third guard portion 34b of the first guard member 34 and the second guard portion 35a and the fourth guard portion 35b of the second guard member 35 are connected smoothly.
   In this case, the third guard portion 34b disposed along the longitudinal direction and the first guard portion 34a disposed along the circumferential direction, as well as the fourth guard portion 35b disposed along the longitudinal direction and the second guard portion 35a disposed along the circumferential direction, are connected smoothly. Therefore, the fishing line is not likely to get caught at the connecting section.
(H) In the spinning reel 100, the rotor 3 is detachable from the rotor body 30 and has, in addition, a second cover member 33 that radially covers the outside of the second rotor arm 30c. The first side portion 30d of the first rotor arm 30b is disposed more on the upstream side of the rotor 3 in the fishing line winding direction A than the other first side portion 30e. The first guard member 34 covers at least one portion of the boundary between the second side portion 30f of the second rotor arm 30c and the second cover member 33 and has a fifth guard portion 34c integrally formed to the first guard portion 34a. The second guard member 35 covers at least one portion of the boundary between the other second side portion 30g of the second rotor arm 30c and the second cover member 33 and has a sixth guard portion 35c integrally formed to the second guard portion 35a. The second side portion 30f of the second rotor arm 30c is disposed more on the downstream side of the rotor in the fishing line winding direction A than the other second side portion 30g.
   In this case, the boundary between the second side portion 30f of the second rotor arm 30c and the second cover member 33 is covered with the first guard member 34, and the boundary between the other second side portion 30g of the second rotor arm 30c and the second cover member 33 is covered with the second guard member 35. Therefore, it is possible to protect the boundary between the pair of second side portions 30f and 30g of the second rotor arm 30c and the second cover member 33 in addition to protecting the boundary between the rear end surface and the outside surface of the coupling portion 30a and the boundary between the pair of first side portions 30d and 30e of the first rotor arm 30b and the first cover member 32.
(I) In the spinning reel 100, the second cover member 33 is fixed at least to the second rotor arm 30c with the screw member 55b. The first guard member 34 is fixed to the rotor body 30 at the connecting section of the first guard portion 34a and the fifth guard portion 34c, and the second guard member 35 is fixed to the rotor body at the connecting section of the second guard portion 35a and the sixth guard portion 35c, respectively, according to the screw member 56b.
   In this case, the second cover member 33 is fixed to the rotor with the screw member 55b, and the first guard member 34 and the second guard member 35 are fixed to the rotor body 30 with the respective screw member 56a and screw member 56b. Therefore, the first guard member 34 and the second guard member 35 can be detached from the rotor body 30 according to the screw members 56a and 56b, respectively.
(J) In the spinning reel 100, the fifth guard portion 34c is disposed between the second cover member 33 and the second rotor arm 30c and has a third holding portion 34i fixed to the second rotor arm 30c according to the second cover member 33. The sixth guard portion 35c is disposed between the second cover member 33 and the second rotor arm 30c and has a fourth holding portion 35i fixed to the second rotor arm 30c according to the second cover member 33.
   In this case, when the second cover member 33 is fixed to the second rotor arm 30c, the third holding portion 34i and the fourth holding portion 35i are fixed to the second rotor arm 30c. Therefore, even if the respective connecting section of the first guard member and the second guard member are fixed with the respective screw member 56a and screw member 56b, wobbling is not likely to occur in the fifth guard portion 34c and the sixth guard portion 35c.
(K) In the spinning reel 100, the third holding portion 34i has a third engaging portion 34j that prevents the displacement of the fifth guard portion 34c by engaging with the inner surface of the second cover member 33 and a second positioning protrusion 34k that is provided separate from the third engaging portion 34j and positions the fifth guard portion 34c. The fourth holding portion 35i has a fourth engaging portion 35j that prevents the displacement of the sixth guard portion 35c by engaging with the inner surface of the second cover member 33 and a fourth positioning protrusion 35k that is provided separate from the fourth engaging portion 35j and positions the sixth guard portion 35c.
   In this case, even if the first guard member 34 and the second guard member 35 are respectively fixed to the rotor body 30 according to the screw member 56a and the screw member 56b at the respective connecting section, displacement of the fifth guard portion 34c of the first guard member 34 and the sixth guard portion 35c of the second guard member 35 can be prevented according to the third engaging portion 34j and the fourth engaging portion 35j, respectively; moreover, the positioning thereof is carried out according to the third positioning protrusion 34k and the fourth positioning protrusion 35k. Therefore, even if a fifth guard portion 34c is provided to the first guard member 34 and a sixth guard portion 35c to the second guard member 35, displacement of the fifth guard portion 34c and the sixth guard portion 35c is not likely to occur.
(L) In the spinning reel 100, the first guard portion 34a and the fifth guard portion 34c of the first guard member 34 and the second guard portion 35a and the sixth guard portion 35c of the second guard member 35 are connected smoothly.
   In this case, the fifth guard portion 34c disposed along the longitudinal direction and the first guard portion 34a disposed along the circumferential direction, as well as the sixth guard portion 35c disposed along the longitudinal direction and the second guard portion 35a disposed along the circumferential direction, are connected smoothly. Therefore, the fishing line is not likely to get caught at the connecting section.
(M) In the spinning reel 100, the first guard member 34 and the second guard member 35 are made from a synthetic resin, and the synthetic resin material is exposed to the outside surface. In this case, the first guard member 34 and the second guard member 35 are made from a synthetic resin. Therefore, reduction in the weight can be achieved even if a guard member that is softer and more easily scratched than that made from metal is installed. Also, the synthetic resin material is exposed to the outside surface, namely, a coat is not formed according to plating, coating, or the like. Therefore, the coat does not peel off, and only the material itself is scratched. As a result, even if the first guard member 34 and the second guard member 35 are scratched, the scratch is not too conspicuous.

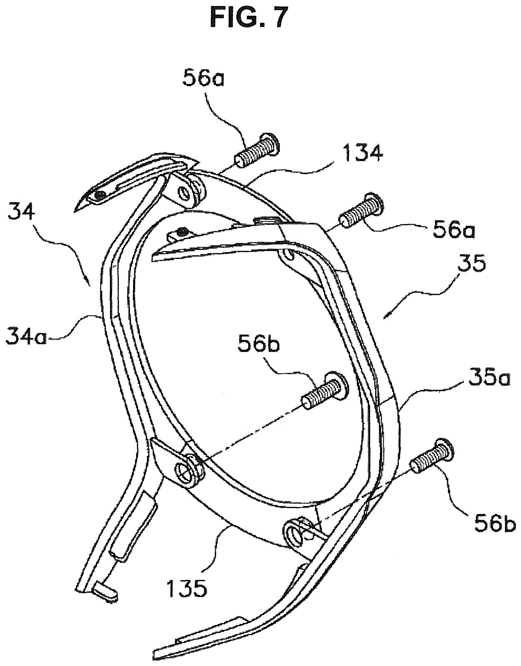

An embodiment of the present invention was described above. However, the present invention is not limited to the embodiment described above, and various changes are possible in a scope of not deviating from the essence of the invention. In particular, the many embodiments and modifications described in the specification can be optionally combined as needed.
(a) In the embodiment described above, a rear cover member is not disposed to the rear surfaces of the first guard member 34 and the second guard member 35. However, the present invention is not limited to this mode. For example, it is possible to provide a first rear cover member 134 and a second rear cover member 135 that respectively connect the two end portions of the first guard portion 34a of the first guard member 34 and the two end portions of the second guard portion 35a of the second guard member 35, as illustrated in FIG. 7. In this case, detachment of the cover members is made easy by providing the first rear cover member 134 and the second rear cover member 135 separate from the first guard member 34 and the second guard member 35, as illustrated in FIG. 7. In FIG. 7, the first rear cover member 134 is fixed to the rotor body 30 together with the first guard member 34 and the second guard member 35 according to the screw member 56a. The second rear cover member 135 is fixed to the rotor body 30 together with the first guard member 34 and the second guard member 35 according to the screw member 56b.
   Also, it is possible to integrally form the first rear cover member 134 to either the first guard member 34 or the second guard member 35 and to integrally form the second rear cover member 135 to the other first guard member 34 or the second guard member 35.
(b) In the embodiment described above, the first and second cover members 32 and 33 were provided to both the first and second rotor arms 30b and 30c. However, the cover member can be provided to only one of the rotor arms. In this case, it is possible in a rotor arm that does not have a cover member, for example, to provide a mounting concave portion to the pair of side parts of the rotor arm. It is also possible not to provide the fifth guard portion and the sixth guard portion.
(c) It is possible to integrally form the third guard portion and the fourth guard portion, as well as the fifth guard portion and the sixth guard portion.
(d) In the other embodiments (a), the first rear cover member and the second rear cover member were provided as separate members. However, these members can be integrally formed into an annular shape. In this case, the screw that is fastening the rear cover member and the guard member with the rotor left attached to the reel body is removed, the rear cover member is slid towards the rear, and the guard member is removed.

## Claims

1. A spinning reel (100) capable of delivering fishing line in the forward direction, the spinning reel comprising:
a reel body (2) whereto a handle (1) is rotatably supported,
a rotor (3) that is supported by the reel body (2) to rotate around the longitudinal axis of the reel body that is offset from an axis of rotation of the handle (1), and
a spool (4) that is supported by the reel body (2) to move in the direction of the longitudinal axis of the reel body, and the spool (4) being arranged to have the fishing line wound thereon by the rotor (3),
the rotor (3) including
a rotor body (30) having a cylindrical coupling portion (30a) that is rotatably supported by the reel body (2), a first rotor arm (30b) that extends forward from a rear end portion of the coupling portion (30a) while being spaced apart from the coupling portion (30a) and having a pair of first side portions (30d, 30e), and a second rotor arm (30c) that extends forward from the rear end portion of the coupling portion (30a) while being spaced apart from the coupling portion (30a) and having a pair of second side portions (30f, 30g),
a first cover member (32) that is detachably mounted to the rotor body (30) and covering a radially outer side of the first rotor arm (30b),
a first guard member (34) that is detachably mounted to the rotor body (30) and having a first guard portion (34a) that covers at least a portion of a boundary between an outside surface of the coupling portion (30a) and a rear end surface of the coupling portion (30a),
and
a fishing line guide portion (36) that is pivotally coupled to the extreme ends of the first rotor arm (30b) and the second rotor arm (30c), the fishing line guide portion being arranged to wind fishing line onto the spool (4),
**characterized in that**
the spinning reel (100) further comprising a second guard member (35) that is detachably mounted to the rotor body (30) and having a second guard portion (35a) that covers at least a portion of a boundary between the outside surface of the coupling portion (30a) and the rear end surface of the coupling portion (30a) at a position that opposes the first guard portion (34a),
the first guard member having a third guard portion (34b) that covers at least a portion of a boundary between the first cover member (32) and one of the first side portions (30e, 30d) of the first rotor arm (30b), and
the second guard member (35) having a fourth guard portion (35b) that covers at least a portion of a boundary between the first cover member (32) and the other first side portion (30e, 30d) of the first rotor arm (30b).

2. The spinning reel (100) according to claim 1, **characterized in that** the first guard portion (34a) and the second guard portion (35a) are disposed in the coupling portion (30a) between the first rotor arm (30b) and the second rotor arm (30c).

3. The spinning reel (100) according to any of the preceding claims, **characterized in that** the first guard portion (34a) is integrally formed to the first guard member (34) and the second guard portion (35a) is integrally formed to the second guard member (35).

4. The spinning reel (100) according to claim 2 or 3, **characterized in that** the first cover member (32) is fixed to the first rotor arm (30b) by at least a first fastening member (55a), and
the first guard member (34) is fixed to the rotor body (30) by a second fastening member (56a) at a connecting section (34d) that is located between the first guard portion (34a) and the third guard portion (34b), and
the second guard member (35) is fixed to the rotor body (30) by a third fastening member (56a) at a connecting section (35d) that is located between the second guard portion (35a) and the fourth guard portion (35b).

5. The spinning reel (100) according to any of the claims 2 to 4, **characterized in that** the third guard portion (34b) is disposed between the first cover member (32) and the first rotor arm (30b) and has a first holding portion (34f) fixed to the first rotor arm (30b) by the first cover member (32), and
the fourth guard portion (35b) is disposed between the first cover member (32) and the first rotor arm (30b) and has a second holding portion (35f) fixed to the first rotor arm (30b) by the first cover member (32).

6. The spinning reel (100) according to claim 5, **characterized in that** the first holding portion (34f) has a first engaging portion (34g) engaging an inner surface of the first cover member (32) and preventing displacement of the third guard portion (34b), and the second holding portion (35f) has a second engaging portion (35g) engaging an inner surface of the first cover member (32) and preventing the displacement of the fourth guard portion (34b).

7. The spinning reel (100) according to claim 6, **characterized in that** the first holding portion (34f) further having a first positioning protrusion (34h) provided separate from the first engaging portion (34g) to position the third guard portion (34b), and
the second holding portion (35f) further having a second positioning protrusion (35h) provided separate from the second engaging portion (35g) to position the fourth guard portion (35b).

8. The spinning reel (100) according to any of the claims 2 to 7, **characterized in that** the first guard portion (34a) and the third guard portion (34b) have exterior surfaces that are smoothly connected to each other, and
the second guard portion (35a) and the fourth guard portion (35b) have exterior surfaces that are smoothly connected to each other.

9. The spinning reel (100) according to any of the claims 2 to 7, **characterized in that** the rotor (3) has a second cover member (33) that covers a radially outer side of the second rotor arm (30c),
one of the first side portions (30d, 30e) of the first rotor arm (30b) being disposed upstream of the other of the first side portion (30d, 30e) with respect to a fishing line winding direction of the rotor (3),
the first guard member (34) covers at least a portion of a boundary between one of the second side portions (30f, 30g) of the second rotor arm (30c) and the second cover member (33), the first guard member (34) further having a fifth guard portion (34c),
the second guard member (35) covers at least a portion of a boundary between the other of the second side portions (30f, 30g) of the second rotor arm (30c) and the second cover member (33),
the second guard member (35a) further having a sixth guard portion (35c), and
one of the second side portions (30f, 30g) of the second rotor arm (30c) being disposed downstream of the other of the second side portions (30f, 30g) with respect to the fishing line winding direction of the rotor (3).

10. The spinning reel (100) according to claim 9, **characterized in that** the second cover member (33) is fixed to the second rotor arm (30c) by at least a fourth fastening member (55b), and
the first guard member (34) is fixed to the rotor body (30) by a fifth fastening member (56b) at a connecting section (34e) that is located between the first guard portion (34a) and the fifth guard portion (34c), and
the second guard member (35) is fixed to the rotor body (30) at a connecting section (35e) that is located between the second guard portion (35a) and the sixth guard portion (35c) by a sixth fastening member (56b).

11. The spinning reel (100) according to any of the claims 9 to 10, **characterized in that** the fifth guard portion (34c) is disposed between the second cover member (33) and the second rotor arm (30c) and has a third holding portion (34i) being fixed to the second cover member (33), and
the sixth guard portion (35c) is disposed between the second cover member (33) and the second rotor arm (30c) and has a fourth holding portion (35i) being fixed to the second cover member (33).

12. The spinning reel (100) according to any of the claims 9 to 11, **characterized in that** the first guard portion (34a) and the fifth guard portion (34c) have exterior surfaces that are smoothly connected to each other, and
the second guard portion (35a) and the sixth guard portion (35c) have exterior surfaces that are smoothly connected to each other.

13. The spinning reel (100) according to any of the preceding claims, **characterized in that** the first guard member (34) and the second guard member (35) are made from a synthetic resin, the synthetic resin material being exposed on the outside surface of each of the first and second guard members (34, 35).

14. The spinning reel (100) according to any of the preceding claims, **characterized in that** the rotor (3) is detachably mounted to the rotor body (30).

## Patentansprüche

1. Angelrolle (100), die fähig ist, eine Angelschnur in Vorwärtsrichtung auszugeben, wobei die Angelrolle aufweist:
einen Rollenkörper (2), an dem ein Griff (1) drehbar gelagert ist,
einen Rotor (3), der durch den Rollenkörper (2) gelagert ist, um herum um die Längsachse des Rollenkörpers zu rotieren, die gegen eine Drehachse des Griffes (1) versetzt ist, und
eine Spule (4), die durch den Rollenkörper (2) gelagert ist, um sich in der Richtung der Längsachse des Rollenkörpers zu bewegen, wobei die Spule (4) angeordnet ist, um die Angelschnur auf diese mittels des Rotors (3) aufzuwickeln,
wobei der Rotor (3) beinhaltet:
einen Rotorkörper (30), der einen zylindrischen Verbindungsabschnitt (30a) aufweist, welcher durch den Rollenkörper (2) drehbar gelagert ist, einen ersten Rotorarm (30b), der sich von einem hinteren Endabschnitt des Verbindungsabschnitts (30a) erstreckt, wobei er beabstandet von dem Verbindungsabschnitt (30a) angeordnet ist und ein Paar von ersten Seitenabschnitten (30d, 30e) aufweist, und einen zweiten Rotorarm (30c), der sich nach vorne von dem hinteren Endabschnitt des Verbindungsabschnitts (30a) erstreckt, wobei er beabstandet von dem Verbindungsabschnitt (30a) angeordnet ist und ein Paar von zweiten Seitenabschnitten (30f, 30g) aufweist,
ein erstes Abdeckungselement (32), das an dem Rotorkörper (30) lösbar befestigt ist und eine radial äußere Seite des ersten Rotorarms (30b) bedeckt,
ein erstes Schutzelement (34), das an dem Rotorkörper (30) lösbar montiert ist und einen ersten Schutzabschnitt (34a) aufweist, der zumindest einen Teil einer Grenze zwischen einer Außenfläche des Verbindungsabschnitts (30a) und einer hinteren Endfläche des Verbindungsabschnitts (30a) bedeckt, und
einen Angelschnur-Führungsabschnitt (36), der schwenkbar mit den äußeren Enden des ersten Rotorarms (30b) und des zweiten Rotorarms (30c) verbunden ist, wobei der Angelschnur-Führungsabschnitt angeordnet ist, um eine Angelschnur auf die Spule (4) aufzuwickeln,
**dadurch gekennzeichnet, dass**
die Angelrolle (100) weiter ein zweites Schutzelement (35) aufweist, das an dem Rotorkörper (30) lösbar montiert ist, und einen zweiten Schutzabschnitt (35a) aufweist, der zumindest einen Teil einer Grenze zwischen der Außenfläche des Verbindungsabschnitts (30a) und der hinteren Endfläche des Verbindungsabschnitts (30a) bedeckt, und zwar an einer Position, die dem ersten Schutzabschnitt (34a) gegenüberliegt, wobei das erste Schutzelement einen dritten Schutzabschnitt (34b) aufweist, der zumindest einen Teil einer Grenze zwischen dem ersten Abdeckungselement (32) und dem einen von den ersten Seitenabschnitten (30e, 30d) des ersten Rotorarms (30b) bedeckt, und
das zweite Schutzelement (35) einen vierten Schutzabschnitt (35b) aufweist, der zumindest einen Teil einer Grenze zwischen dem ersten Abdeckungselement (32) und dem anderen von den ersten Seitenabschnitten (30e, 30d) des ersten Rotorarms (30b) bedeckt.

2. Angelrolle (100) nach Anspruch 1, **dadurch gekennzeichnet, dass**
der erste Schutzabschnitt (34a) und der zweite Schutzabschnitt (35a) in dem Verbindungsabschnitt (30a) zwischen dem ersten Rotorarm (30b) und dem zweiten Rotorarm (30c) angeordnet sind.

3. Angelrolle (100) nach einem der vorhergehenden Ansprüche, **dadurch gekennzeichnet, dass**
der erste Schutzabschnitt (34a) integral mit dem ersten Schutzelement (34) ausgebildet ist und der zweite Schutzabschnitt (35a) integral mit dem zweiten Schutzelement (35) ausgebildet ist.

4. Angelrolle (100) nach einem der Ansprüche 2 oder 3, **dadurch gekennzeichnet, dass** das erste Abdeckungselement (32) an dem ersten Rotorarm (30b) mittels zumindest eines ersten Befestigungselementes (55a) fest angebracht ist, und
das erste Schutzelement (34) an dem Rotorkörper (30) mittels eines zweiten Befestigungselementes (56a) fest angebracht ist, und zwar bei einem Verbindungsteilstück (34d), das sich zwischen dem ersten Schutzabschnitt (34a) und dem dritten Schutzabschnitt (34b) befindet, und
das zweite Schutzelement (35) an dem Rotorkörper (30) mittels eines dritten Befestigungselementes (56a) fest angebracht ist, und zwar bei einem Verbindungsteilstück (35d), das sich zwischen dem zweiten Schutzabschnitt (35a) und dem vierten Schutzabschnitt (35b) befindet.

5. Angelrolle (100) nach einem der Ansprüche 2 bis 4, **dadurch gekennzeichnet, dass** der dritte Schutzabschnitt (34b) zwischen dem ersten Abdeckungselement (32) und dem ersten Rotorarm (30b) angeordnet ist und einen ersten Halteabschnitt (34f) aufweist, der an dem ersten Rotorarm (30b) mittels des ersten Abdeckungselementes (32) fest angebracht ist, und
der vierte Schutzabschnitt (35b) zwischen dem ersten Abdeckungselement (32) und dem ersten Rotorarm (30b) angeordnet ist und einen zweiten Halteabschnitt (35f) aufweist, der an dem ersten Rotorarm (30b) mittels des ersten Abdeckungselementes (32) fest angebracht ist.

6. Angelrolle (100) nach Anspruch 5, **dadurch gekennzeichnet, dass** der erste Halteabschnitt (34f) einen ersten Eingreifabschnitt (34g) aufweist, der mit einer Innenfläche des ersten Abdeckungselementes (32) in Eingriff ist und ein Verschieben des dritten Schutzabschnittes (34b) verhindert, und
der zweite Halteabschnitt (35f) einen zweiten Eingreifabschnitt (35g) aufweist, der mit einer Innenfläche des ersten Abdeckungselementes (32) in Eingriff ist und das Verschieben des vierten Schutzabschnittes (34b) verhindert.

7. Angelrolle (100) nach Anspruch 6, **dadurch gekennzeichnet, dass** der erste Halteabschnitt (34f) weiter einen ersten Positionierungsvorsprung (34h) aufweist, der separat von dem ersten Eingreifabschnitt (34g) vorgesehen ist, um den dritten Schutzabschnitt (34b) zu positionieren, und
der zweite Halteabschnitt (35f) weiter einen zweiten Positionierungsvorsprung (35h) aufweist, der separat von dem zweiten Eingreifabschnitt (35g) vorgesehen ist, um den vierten Schutzabschnitt (35b) zu positionieren.

8. Angelrolle (100) nach einem der Ansprüche 2 bis 7, **dadurch gekennzeichnet, dass** der erste Schutzabschnitt (34a) und der dritte Schutzabschnitt (34b) Außenflächen aufweisen, die in sanft übergehender Weise miteinander verbunden sind, und
der zweite Schutzabschnitt (35a) und der vierte Schutzabschnitt (35b) Außenflächen aufweisen, die in sanft übergehender Weise miteinander verbunden sind.

9. Angelrolle (100) nach einem der Ansprüche 2 bis 7, **dadurch gekennzeichnet, dass** der Rotor (3) ein zweites Abdeckungselement (33) aufweist, das eine radial äußere Seite des zweiten Rotorarms (30c) bedeckt,
der eine von den ersten Seitenabschnitten (30d, 30e) des ersten Rotorarms (30b) in Strömungsrichtung vor dem anderen von den ersten Seitenabschnitten (30d, 30e) angeordnet ist, und zwar bezüglich einer Angelschnur-Aufwickelrichtung des Rotors (3),
das erste Schutzelement (34) zumindest einen Teil einer Grenze zwischen dem einen von den zweiten Seitenabschnitten (30f, 30g) des zweiten Rotorarms (30c) und dem zweiten Abdeckungselement (33) bedeckt, wobei das erste Schutzelement (34) weiter einen fünften Schutzabschnitt (34c) aufweist,
das zweite Schutzelement (35) zumindest einen Teil einer Grenze zwischen dem anderen von den zweiten Seitenabschnitten (30f, 30g) des zweiten Rotorarms (30c) und dem zweiten Abdeckungselement (33) bedeckt,
das zweite Schutzelement (35a) weiter einen sechsten Schutzabschnitt (35c) aufweist, und der eine von den zweiten Seitenabschnitten (30f, 30g) des zweiten Rotorarms (30c) in Strömungsrichtung hinter dem anderen von den zweiten Seitenabschnitten (30f, 30g) angeordnet ist, und zwar bezüglich der Angelschnur-Aufwickelrichtung des Rotors (3).

10. Angelrolle (100) nach Anspruch 9, **dadurch gekennzeichnet, dass**
das zweite Abdeckungselement (33) an dem zweiten Rotorarm (30c) mittels zumindest eines vierten Befestigungselementes (55b) fest angebracht ist, und
das erste Schutzelement (34) an dem Rotorkörper (30) mittels eines fünften Befestigungselementes (56b) fest angebracht ist, und zwar bei einem Verbindungsteilstück (34e), das sich zwischen dem ersten Schutzabschnitt (34a) und dem fünften Schutzabschnitt (34c) befindet, und
das zweite Schutzelement (35) an dem Rotorkörper (30) bei einem Verbindungsteilstück (35e), das sich zwischen dem zweiten Schutzabschnitt (35a) und dem sechsten Schutzabschnitt (35c) befindet, fest angebracht ist, und zwar mittels eines sechsten Befestigungselementes (56b).

11. Angelrolle (100) nach einem der Ansprüche 9 bis 10, **dadurch gekennzeichnet, dass** der fünfte Schutzabschnitt (34c) zwischen dem zweiten Abdeckungselement (33) und dem zweiten Rotorarm (30c) angeordnet ist und einen dritten Halteabschnitt (34i) aufweist, der an dem zweiten Abdeckungselement (33) fest angebracht ist, und
der sechste Schutzabschnitt (35c) zwischen dem zweiten Abdeckungselement (33) und dem zweiten Rotorarm (30c) angeordnet ist und einen vierten Halteabschnitt (35i) aufweist, der an dem zweiten Abdeckungselement (33) fest angebracht ist.

12. Angelrolle (100) nach einem der Ansprüche 9 bis 11, **dadurch gekennzeichnet, dass** der erste Schutzabschnitt (34a) und der fünfte Schutzabschnitt (34c) Außenflächen aufweisen, die in sanft übergehender Weise miteinander verbunden sind, und
der zweite Schutzabschnitt (35a) und der sechste Schutzabschnitt (35c) Außenflächen aufweisen, die in sanft übergehender Weise miteinander verbunden sind.

13. Angelrolle (100) nach einem der vorhergehenden Ansprüche, **dadurch gekennzeichnet, dass**
das erste Schutzelement (34) und das zweite Schutzelement (35) aus einem Kunstharz hergestellt sind, wobei das Kunstharzmaterial auf der Außenseite eines jeden von dem ersten und dem zweiten Schutzelement (34, 35) freiliegt.

14. Angelrolle (100) nach einem der vorhergehenden Ansprüche, **dadurch gekennzeichnet, dass**
der Rotor (3) an dem Rotorkörper (30) lösbar montiert ist.

## Revendications

1. Moulinet de pêche (100) pouvant distribuer une ligne de pêche dans la direction avant, le moulinet de pêche comprenant :
un corps de moulinet (2) sur lequel une poignée (1) est supportée en rotation,
un rotor (3) qui est supporté par le corps de moulinet (2) pour tourner autour de l'axe longitudinal du corps de moulinet qui est décalé d'un axe de rotation de la poignée (1), et
une bobine (4) qui est supportée par le corps de moulinet (2) pour se déplacer dans la direction de l'axe longitudinal du corps de moulinet, et la bobine (4) étant agencée pour avoir la ligne de pêche enroulée sur cette dernière par le rotor,
le rotor (3) comprenant :
un corps de rotor (30) ayant une partie de couplage cylindrique (30a) qui est supportée en rotation par le corps de moulinet (2), un premier bras de rotor (30b) qui s'étend vers l'avant à partir d'une partie d'extrémité arrière de la partie de couplage (30a) tout en étant espacé de la partie de couplage (30a) et ayant une paire de premières parties latérales (30d, 30e), et un second bras de rotor (30c) qui s'étend vers l'avant à partir de la partie d'extrémité arrière de la partie de couplage (30a) tout en étant espacé de la partie de couplage (30a) et ayant une paire de secondes parties latérales (30f, 30g),
un premier élément de couvercle (32) qui est monté de manière détachable sur le corps de rotor (30) et recouvrant un côté radialement externe du premier bras de rotor (30b),
un premier élément de protection (34) qui est monté de manière détachable sur le corps de rotor (30) et ayant une première partie de protection (34a) qui recouvre au moins une partie d'une limite entre une surface externe de la partie de couplage (30a) et une surface d'extrémité arrière de la partie de couplage (30a), et
une partie de guidage de ligne de pêche (36) qui est couplée de manière pivotante aux extrémités extrêmes du premier bras de rotor (30b) et du second bras de rotor (30c), la partie de guidage de ligne de pêche étant agencée pour enrouler la ligne de pêche sur la bobine (4), **caractérisé en ce que** :
le moulinet de pêche (100) comprend en outre un second élément de protection (35) qui est monté de manière détachable sur le corps de rotor (30) et ayant une deuxième partie de protection (35a) qui recouvre au moins une partie d'une limite entre la surface externe de la partie de couplage (30a) et la surface d'extrémité arrière de la partie de couplage (30a) dans une position qui est opposée à la première partie de protection (34a), le premier élément de protection ayant une troisième partie de protection (34b) qui recouvre au moins une partie d'une limite entre le premier élément de couvercle (32) et l'une des premières parties latérales (30e, 30d) du premier bras de rotor (30b), et
le second élément de protection (35) ayant une quatrième partie de protection (35b) qui recouvre au moins une partie d'une limite entre le premier élément de couvercle (32) et l'autre première partie latérale (30e, 30d) du premier bras de rotor (30b).

2. Moulinet de pêche (100) selon la revendication 1, **caractérisé en ce que** :
la première partie de protection (34a) et la deuxième partie de protection (35a) sont disposées dans la partie de couplage (30a) entre le premier bras de rotor (30b) et le second bras de rotor (30c).

3. Moulinet de pêche (100) selon l'une quelconque des revendications précédentes, **caractérisé en ce que** la première partie de protection (34a) est formée d'une seule pièce avec le premier élément de protection (34) et la deuxième partie de protection (35a) est formée d'une seule pièce avec le second élément de protection (35).

4. Moulinet de pêche (100) selon la revendication 2 ou 3, **caractérisé en ce que** :
le premier élément de couvercle (32) est fixé sur le premier bras de rotor (30b) par au moins un premier élément de fixation (55a), et
le premier élément de protection (34) est fixé sur le corps de rotor (30) par un deuxième élément de fixation (56a) au niveau d'une section de raccordement (34d) qui est positionnée entre la première partie de protection (34a) et la troisième partie de raccordement (34b), et
le second élément de protection (35) est fixé sur le corps de rotor (30) par un troisième élément de fixation (56a) au niveau d'une section de raccordement (35d) qui est positionnée entre la deuxième partie de protection (35a) et la quatrième partie de protection (35b).

5. Moulinet de pêche (100) selon l'une quelconque des revendications 2 à 4, **caractérisé en ce que** :
la troisième partie de protection (34b) est disposée entre le premier élément de couvercle (32) et le premier bras de rotor (30b) et a une première partie de maintien (34) fixée au premier bras de rotor (30b) par le premier élément de couvercle (32), et
la quatrième partie de protection (35b) est disposée entre le premier élément de couvercle (32) et le premier bras de rotor (30b) et a une deuxième partie de maintien (35f) fixée sur le premier bras de rotor (30b) par le premier élément de couvercle (32).

6. Moulinet de pêche (100) selon la revendication 5, **caractérisé en ce que** :
la première partie de maintien (34f) a une première partie de mise en prise (34g) mettant en prise une surface interne du premier élément de couvercle (32) et empêchant le déplacement de la troisième partie de protection (34b), et
la deuxième partie de maintien (35f) a une seconde partie de mise en prise (35g) mettant en prise une surface interne du premier élément de couvercle (32) et empêchant le déplacement de la quatrième partie de protection (34b).

7. Moulinet de pêche (100) selon la revendication 6, **caractérisé en ce que** :
la première partie de maintien (34f) ayant en outre une première saillie de positionnement (34h) prévue séparément de la première partie de mise en prise (34g) pour positionner la troisième partie de protection (34b), et
la deuxième partie de maintien (35f) ayant en outre une seconde saillie de positionnement (35h) prévue séparément de la seconde partie de mise en prise (35g) pour positionner la quatrième partie de protection (35b).

8. Moulinet de pêche (100) selon l'une quelconque des revendications 2 à 7, **caractérisé en ce que** :
la première partie de maintien (34a) et la troisième partie de protection (34b) ont des surfaces extérieures qui sont raccordées en douceur entre elles, et
la deuxième partie de protection (35a) et la quatrième partie de protection (35b) ont des surfaces extérieures qui sont raccordées en douceur entre elles.

9. Moulinet de pêche (100) selon l'une quelconque des revendications 2 à 7, **caractérisé en ce que** :
le rotor (3) a un second élément de couvercle (33) qui recouvre un côté radialement externe du second bras de rotor (30c),
l'une des premières parties latérales (30d, 30e) du premier bras de rotor (30b) étant disposée en amont de l'autre des premières parties latérales (30d, 30e) par rapport à une direction d'enroulement de la ligne de pêche du rotor (3),
le premier élément de protection (34) recouvre au moins une partie d'une limite entre l'une des secondes parties latérales (30f, 30g) du second bras de rotor (30c) et le second élément de couvercle (33),
le premier élément de protection (34) ayant en outre une cinquième partie de protection (34c), le second élément de protection (35) recouvre au moins une partie d'une limite entre l'autre des secondes parties latérales (30f, 30g) du second bras de rotor (30c) et le second élément de couvercle (33),
le second élément de protection (35a) ayant en outre une sixième partie de protection (35c), et
l'une des secondes parties latérales (30f, 30g) du second bras de rotor (30c) étant disposée en aval de l'autre des secondes parties latérales (30f, 30g) par rapport à la direction d'enroulement de la ligne de pêche du rotor (3).

10. Moulinet de pêche (100) selon la revendication 9, **caractérisé en ce que** :
le second élément de couvercle (33) est fixé sur le second bras de rotor (30c) par au moins un quatrième élément de fixation (55b), et
le premier élément de protection (34) est fixé sur le corps de rotor (30) par un cinquième élément de fixation (56b) au niveau d'une section de raccordement (34e) qui est positionnée entre la première partie de protection (34a) et la cinquième partie de protection (34c), et
le second élément de protection (35) est fixé au corps de rotor (30) au niveau d'une section de raccordement (35e) qui est positionnée entre la deuxième partie de protection (35a) et la sixième partie de protection (35c) par un sixième élément de fixation (56b).

11. Moulinet de pêche (100) selon l'une quelconque des revendications 9 à 10, **caractérisé en ce que** :
la cinquième partie de protection (34c) est disposée entre le second élément de couvercle (33) et le second bras de rotor (30c) et a une troisième partie de maintien (34i) qui est fixée sur le second élément de couvercle (33), et
la sixième partie de protection (35c) est disposée entre le second élément de couvercle (33) et le second bras de rotor (30c) et a une quatrième partie de maintien (35i) qui est fixée sur le second élément de couvercle (33).

12. Moulinet de pêche (100) selon l'une quelconque des revendications 9 à 11, **caractérisé en ce que** :
la première partie de protection (34a) et la cinquième partie de protection (34c) ont des surfaces extérieures qui sont raccordées en douceur entre elles, et
la deuxième partie de protection (35a) et la sixième partie de protection (35c) ont des surfaces extérieures qui sont raccordées en douceur entre elles.

13. Moulinet de pêche (100) selon l'une quelconque des revendications précédentes, **caractérisé en ce que** :
le premier élément de protection (34) et le second élément de protection (35) sont réalisés à partir d'une résine synthétique, le matériau en résine synthétique étant exposé sur la surface extérieure de chacun des premier et second éléments de protection (34, 35).

14. Moulinet de pêche (100) selon l'une quelconque des revendications précédentes, **caractérisé en ce que** :
le rotor (3) est monté de manière détachable sur le corps de rotor (30).
